# EUROPEAN PATENT SPECIFICATION

(11) **EP 4 571 958 B1**
(45) Date of publication and mention of the grant of the patent: **30.09.2026**
(21) Application number: 23868355.1
(22) Date of filing: 24.07.2023
(51) Int. Cl.: H01M 50/124, H01M 50/131, H01M 50/116, C09D 11/03, B41M 3/00, H01M 50/211, H01M 50/105, H01M 50/262, H01F 7/00

(54) **CELL ASSEMBLY AND BATTERY MODULE INCLUDING THE SAME, AND BATTERY PACK**
ZELLMONTAGE UND BATTERIEMODUL EINSCHLIESSLICH DIESER ELEMENTE UND BATTERIEPACKUNG
ENSEMBLE DE CELLULE ET MODULE DE BATTERIE COMPRENANT CE QUI SUIT, ET PACK DE BATTERIE

(30) Priority: 23.09.2022 KR 20220121206
(43) Date of publication of application: 18.06.2025
(73) Proprietor: LG Energy Solution, Ltd., Seoul 07335 (KR)
(72) Inventor: SEON, Sang Ok, Daejeon 34122 (KR)
(74) Representative: Plasseraud IP
(86) International application number: PCT/KR2023/010672
(87) International publication number: WO 2024/063295

(56) References cited:
- EP-A1- 3 731 323
- CN-A- 103 210 521
- CN-A- 114 665 170
- CN-A- 114 665 170
- CN-U- 209 860 073
- JP-A- 2009 500 785
- JP-A- 2017 054 681
- US-A1- 2013 295 418

## Description

### TECHNICAL FIELD

### CROSS-REFERENCE TO RELATED APPLICATION

The present application claims the benefit of the priority of Korean Patent Application No. 10-2022-0121206, filed on September 23, 2022.

### TECHNICAL FIELD

The present invention relates to an automatically aligned cell assembly, which is improved in structure to automatically align cells, prevent the cells from being non-uniformly attached during the alignment, and fine physical positions of the cells, thereby improving stacking workability.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Secondary batteries are receiving a lot of attention as an energy source in a variety of products such as mobile devices and electric vehicles. These secondary batteries are an excellent energy resource, which is capable of replacing the use of existing products using fossil fuels, and are attracting attention as an eco-friendly energy source because the secondary batteries do not generate by-products due to the energy use.

To manufacture such a secondary battery, a unit cell formed by stacking an electrode and a separator may be manufactured first, and the unit cell may be manufactured into a secondary battery through each process of the manufacturing process. The unit cells may be stacked during the manufacturing process to form a cell assembly, a battery module, and a battery pack, and thus, a process of aligning the unit cells may be required.

According to the related art, in the process of allowing the battery cells to overlap each other so as to manufacture the module, the cells may be fixed using a double-sided tape to prevent pouch cells from moving. However, in this process, when a machine misunderstands and mis-recognize a length of the cell, the cells may not be aligned consistently, and the misalignment may not be corrected.

Document US 2013/295418 A1 relates to an electrochemical energy store, an arrangement of a plurality of such electrochemical energy stores, a method for producing such an electrochemical energy store and a method for producing an arrangement of a plurality of such electrochemical energy stores. Document EP 3 731 323 A1 relates to a pressing jig including a magnet, and a battery module including the same. Document CN 114 665 170 A relates to the technical field of cell fabrication, in particular to a high-performance cell structure.

### DISCLOSURE OF THE INVENTION

### TECHNICAL PROBLEM

The present invention is invented to solve the above problems, and an object of the present invention is to provide an automatically aligned cell assembly, which is improved in structure to automatically align cells, prevent the cells from being non-uniformly attached during the alignment, and fine physical positions of the cells, thereby improving stacking workability.

### TECHNICAL SOLUTION

A cell assembly according to the present invention may be manufactured by stacking a plurality of cells. The cell assembly includes a first cell, which is one of the plurality of cells, and a second cell facing the first cell.

The first cell includes a first surface facing the second cell. The second cell includes a second surface facing the first surface.

A first magnet having a first polarity is disposed on the first surface, and a second magnet having a second polarity that is opposite to the first polarity is disposed on the second surface. The first magnet and the second magnet are disposed at positions corresponding to each other, respectively.

A plurality of first magnets may be disposed on the first surface, and a plurality of second magnets may be disposed on the second surface. The plurality of first and second magnets may be disposed at corresponding positions, respectively.

A first' magnet having a second polarity is further disposed on the first surface, and a second' magnet having a first polarity is further disposed on the second surface. The first' and second' magnets are disposed at positions corresponding to each other, respectively.

Each of the first surface and the second surface may be made of a pouch material, the first magnet may be printed on a surface of the first surface, and the second magnet may be printed on a surface of the second surface.

The second cell may further include a second' surface disposed at a side opposite to the second surface, and at least one or more second'' magnets may be disposed on the second' surface.

The cell assembly may further include a third cell, which is one cell of the plurality of cells.

The third cell may include a third surface that faces the second' surface, and a third magnet having a polarity opposite to that of the second'' magnet may be disposed at a position corresponding to the second'' magnet on the third surface.

A second‴ magnet having a polarity that is opposite to that of the second'' magnet may be further disposed on the second' surface, and a third' magnet having a polarity that is opposite to that of the second‴ magnet may be further disposed on the third surface. The second‴ magnet and the third' magnet may be disposed at positions corresponding to each other, respectively.

The second magnet and the second'' magnet may be disposed at positions corresponding to each other, respectively, and the second' magnet and the second‴ magnet may be disposed at positions corresponding to each other, respectively.

The second magnet and the second'' magnet may be disposed at different positions, respectively, and the second' magnet and the second‴ magnet may be disposed at different positions, respectively.

Each of the second' surface and the third surface may be made of a pouch material, the second'' magnet may be printed on a surface of the second' surface, and the third magnet may be printed on a surface of the third surface.

A battery module according to the present invention may include a cell assembly, in which a plurality of cells are stacked, and a frame configured to accommodate the cell assembly.

A battery pack according to the present invention may a battery module including a cell assembly and a frame and a housing.

### ADVANTAGEOUS EFFECTS

According to the present invention, the structure may be improved so that the magnet is printed on each of the surfaces of the battery cells to automatically align the cells, prevent the cells from being non-uniformly attached during the alignment, and fine physical positions of the cells, thereby improving stacking workability.

### BRIEF DESCRIPTION OF THE DRAWINGS

FIG. 1 is a perspective view illustrating a cell assembly in which battery cells are stacked according to the present invention.
FIG. 2 is a cross-sectional view illustrating first and second cells in a cell assembly according to Embodiment 1 of the present invention.
FIG. 3 is a cross-sectional view illustrating first and second cells in a cell assembly according to Embodiment 2 of the present invention.
FIG. 4 is a cross-sectional view illustrating first and second cells in a cell assembly according to Embodiment 3 of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

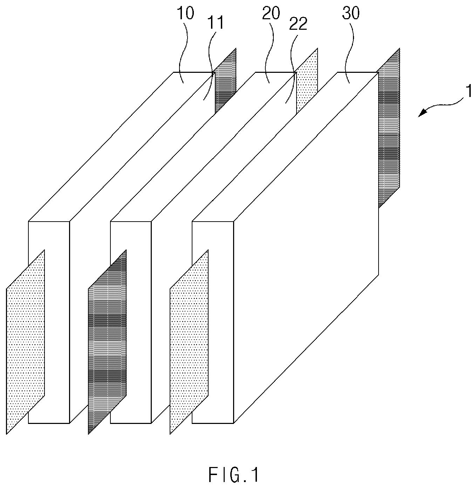

FIG. 1 is a perspective view illustrating a cell assembly in which battery cells are stacked according to the present invention.

Referring to FIG. 1, it is seen that battery cells are stacked to form a cell assembly 1. Hereinafter, the cell assembly 1 and a method for forming the cell assembly 1 of the present invention will be described through Embodiments 1, 2, and 3.

### Embodiment 1

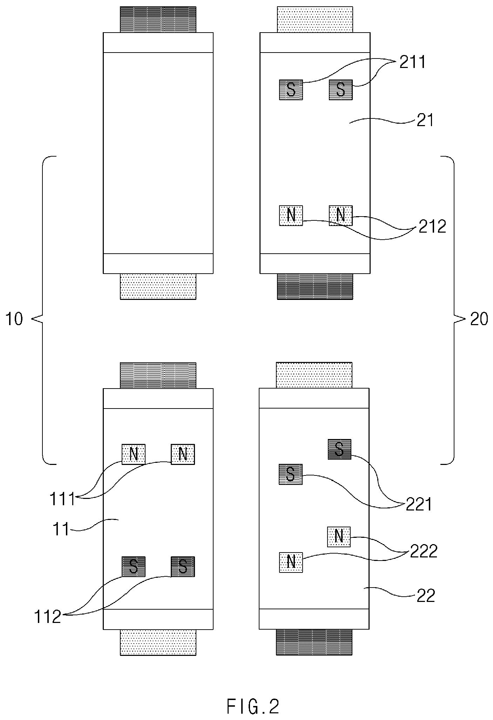

FIG. 2 is a cross-sectional view illustrating first and second cells in a cell assembly according to Embodiment 1 of the present invention.

Referring to FIG. 2, a cell assembly 1 according to Embodiment 1 of the present invention may include a first cell 10 and a second cell 20. The cell assembly 1 may be formed by stacking a plurality of cells. Referring to FIG. 2, a first surface 11 of the first cell 10 is illustrated at a left lower end, and a second surface 21, which is a surface facing the first surface 11, is illustrated at a right upper portion. A second' surface 22 is illustrated at a right lower end.

The first cell 10 may include the first surface 11. A first magnet 111 may be disposed on the first surface 11. The first surface 11 is illustrated as a rectangle, but the first surface 11 is not limited thereto and may have various shapes.

The first magnet 111 may have a first polarity. A plurality of first magnets 111 may be disposed on the first surface 11.

The second cell 20 may include the second surface 21. The second surface 21 may be disposed to face the first surface 11. The second surface 21 may have the same size as the first surface 11. A second magnet 211 may be disposed on the second surface 21. The second magnet 211 may have a second polarity. The second polarity may be opposite to the first polarity. A plurality of second magnets 211 may be disposed on the second surface 21. The first polarity and the second polarity may be arbitrarily designated, and the first polarity may be an N-pole or an S-pole, and correspondingly, the second polarity may also be an S-pole or an N-pole.

The second cell 20 may further include a second' surface 22. The second' surface 22 may be disposed at an opposite side of the second surface 21. A second'' magnet 221 may be disposed on the second' surface 22. At least one or more second'' magnets 221 may be disposed on the second'' surface 22. The second' surface 22 may be provided in a shape corresponding to the second surface 21.

The first magnet 111 and the second magnet 211 may be disposed at corresponding positions, respectively. The first cell 10 and the second cell 20 may be disposed at corresponding positions so that the first cell 10 and the second cell 20 are well attached to each other. When forming the cell assembly 1, each of the first magnet 111 and the second magnet 211 is illustrated in a rectangular shape, but is not limited thereto.

A first' magnet 112 may be further disposed on the first surface 11. The first' magnet 112 may have a second polarity. Since the first magnet 111 and the first' magnet 112 have different polarities, the first magnet 111 and the first' magnet 112 may be disposed at regular intervals. A second' magnet 212 may be further disposed on the second surface 21. The second' magnet 212 may have a first polarity. Since the second magnet 211 and the second' magnet 212 have different polarities, the second magnet 211 and the second' magnet 212 may be disposed at regular intervals. The first' magnet 112 and the second' magnet 212 may be disposed at positions corresponding to each other, respectively. Although each of the first' magnet 112 and the second' magnet 212 is illustrated in the rectangular shape, the present invention is not limited thereto.

Each of the first surface 11 and the second surface 21 may be made of a pouch material. The second' surface 22 may also be made of a pouch material. The first magnet 111 may be printed on a surface of the first surface 11. The second magnet 211 may be printed on a surface of the second surface 21. The first' magnet 112 and the second' magnet 212 may be printed on the surfaces of the first surface 11 and the second surface 21, respectively. The first magnet 111, the first' magnet 112, the second magnet 211, and the second' magnet 212 may be disposed to be printed on a surface of a pouch of the cell before constructing and manufacturing a negative electrode material, a positive electrode material, and a separator electrolyte in the pouch cell.

The present invention may include a battery module (not shown) including the cell assembly 1 according to Embodiment 1 and a frame (not shown) accommodating the cell assembly 1.

The present invention may include a battery pack (not shown) including the battery module (not shown) including the cell assembly 1 according to Embodiment 1 and a housing (not shown) accommodating the battery module.

According to the related art, in the process of allow the battery cells to overlap each other so as to manufacture the cell assembly and the module, the cells may be fixed using a double-sided tape to prevent the pouch cells from moving. However, in the process, when a machine misrecognizes a length of the cell, and thus, the cells may not be aligned consistently so as to be misaligned, the misalignment may not be corrected. Referring to Embodiment 1, in the present invention, when the cells are stacked and aligned, the cells may be aligned through the magnet printed on each of the cells. For example, when the first magnet 111 printed on the first surface 11 is the N-pole, the second magnet 211 that is the S-pole may be printed on the second surface 21 so that the first cell 10 and the second cell 10 are attached and aligned by the magnets. In addition, the first' magnet 112 may be additionally printed on the first surface 11, and the second' magnet 212 may be additionally printed on the second surface 21. If the first' magnet 112 is the S-pole, the second' magnet 212 may be printed as the N-pole, and thus, the first' magnet 112 and the second' magnet 212 may be coupled to each other to more increase in coupling force between the first cell 10 and the second cell 20. Since the magnet is not completely attached, it has a feature of being able to readjust the alignment of the cells when the cells are misaligned.

### Embodiment 2

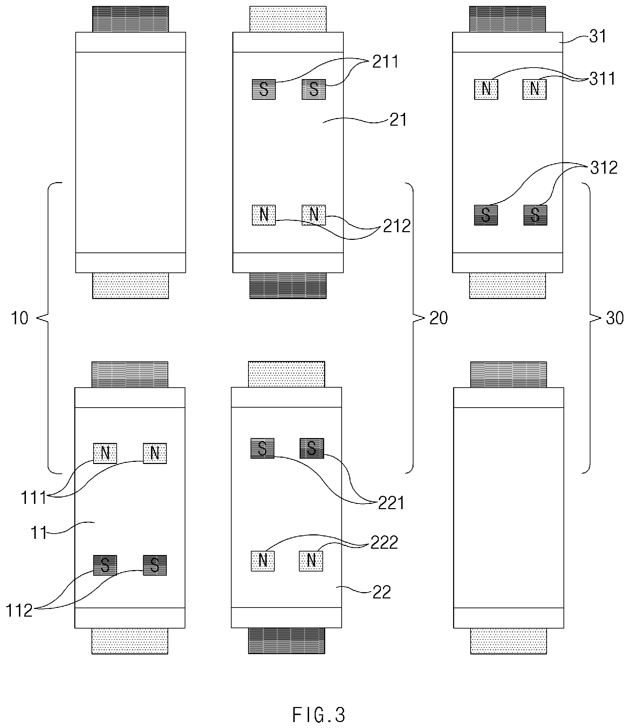

FIG. 3 is a cross-sectional view illustrating first and second cells in a cell assembly according to Embodiment 2 of the present invention.

Embodiment 2 of the present invention may be different from Embodiment 1 in that a third cell 30 in addition to the first cell 10 and the second cell 20 is provided. The contents that are duplicated with Embodiment 1 will be omitted as much as possible, and Embodiment 2 will be described with a focus on the differences.

Referring to FIG. 3, a cell assembly 1 according to Embodiment 2 of the present invention may further include the third cell 30.

The third cell 30 may include a third surface 31. The third surface 31 may face a second' surface 22. A third magnet 311 may be disposed on the third surface 31. A plurality of third magnets 311 may be disposed on the third surface 31. The third surface 31 is illustrated in a rectangular shape, but is not limited thereto.

A second'' magnet 221 may be disposed on the second' surface 22. The third magnet 311 may have a polarity opposite to that of the second'' magnet 221. The third magnet 311 may be disposed at a position corresponding to the second'' magnet 221.

A second‴ magnet 222 may be further disposed on the second' surface 22. The second‴ magnet 222 may have a polarity that is opposite to that of the second" magnet 221. A plurality of second''' magnets 222 may be disposed on the second' surface 22.

A third' magnet 312 may be further disposed on the third surface 31. The third' magnet 312 may have a polarity opposite to that of the second‴ magnet 222. A plurality of third' magnets 312 may be disposed on the third surface 31.

The second magnet 211 and the second'' magnet 221 may be disposed at positions corresponding to each other, respectively. The second' magnet 212 and the second‴ magnet 222 may be disposed at positions corresponding to each other, respectively. Each of the third magnet 311, the third' magnet 312, the second'' magnet 221, and the second‴ magnet 222 is illustrated in a rectangular shape, but is not limited thereto.

When compared to Embodiment 1, in Embodiment 2, a second' surface 22 and a third cell 30 are additionally provided. The third surface 31 and the second' surface 22 of the third cell 30 are attached by the magnets. As a result, the first cell 10, the second cell 20, and the third cell 30 may be attached to each other by the magnets to form the cell assembly 1, and the plurality of cells may be sequentially coupled to each other to form the cell assembly 1 include more cells.

### Embodiment 3

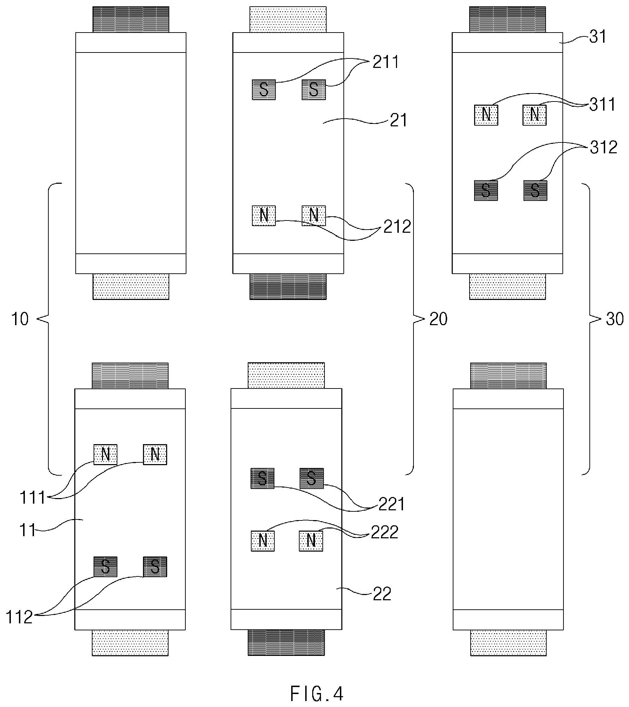

FIG. 4 is a cross-sectional view illustrating first and second cells in a cell assembly according to Embodiment 3 of the present invention.

Embodiment 3 of the present invention may be different from Embodiment 2 in that magnets of a second cell 20 and a third cell 30 are disposed differently. The contents that are duplicated with Embodiment 2 will be omitted as much as possible, and Embodiment 3 will be described with a focus on the differences. That is, it is obvious that contents that are not described in Embodiment 2 may be regarded as the contents of, Embodiment 1 if necessary.

Referring to FIG. 4, a cell assembly 1 according to Embodiment 3 of the present invention may further include the third cell 30. The third cell 30 may include a third magnet 311 and a third' magnet 312. The second cell 20 may include a second'' magnet 221 and a second‴ magnet 222.

The second magnet 211 and the second'' magnet 221 may be disposed at different positions, respectively. The second' magnet 212 and the second‴ magnet 222 may be disposed at different positions, respectively. The third magnet 311 and the third' magnet 312 may be disposed on a third surface 31 to correspond to the positions of the second'' magnet 221 and the second‴ magnet 222.

When compared to Embodiment 2, in Embodiment 3, the second'' magnet 221, the second‴ magnet 222, the third magnet 311, and the third' magnet 312 are disposed differently. This is because the positions of the second" magnet 221 and the second‴ magnet 222 are different from those of the second magnet 221 and the second' magnet 212 disposed on the second surface 21 to more increase in attractive force between the magnets. The second magnet 211 and the third magnet 311 have the same polarity, and the second' magnet 212 and the third' magnet 312 may also have the same polarity. Here, when the second magnet 211 and the third magnet 311 are disposed at the same position based on a direction perpendicular to the surface of the cell, the coupling force may be somewhat weakened due to the repulsive force between the magnets. To prevent this phenomenon, the positions at which the magnets are disposed may be changed, and an effect between the magnets may be reduced to strengthen the coupling force.

The magnets described above are not limited to specific magnet types and may be polarized magnetic materials.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

1: Cell assembly
10: First cell
11: First surface
111: First magnet
112: First' magnet
20: Second cell
21: Second surface
211: Second magnet
222: Second' magnet
30: Third cell
31: Third surface
311: Third magnet
312: Third' magnet

## Claims

1. A cell assembly (1) in which a plurality of cells are stacked, the cell assembly comprising:
a first cell (10) that is one of the plurality of cells; and
a second cell (20) that faces the first cell (10),
wherein the first cell (10) comprises a first surface (11) that faces the second cell (20), and
the second cell (20) comprises a second surface (21) that faces the first surface (11),
wherein a first magnet (111) having a first polarity is disposed on the first surface (11),
a second magnet (211) having a second polarity that is opposite to the first polarity (111) is disposed on the second surface (21),
the first magnet (111) and the second magnet (211) are disposed at positions corresponding to each other,
wherein a first' magnet (112) having the second polarity is further disposed on the first surface (11), and
a second' magnet (212) having the first polarity is further disposed on the second surface (21),
wherein the first' and second' magnets (112, 212) are disposed at corresponding positions, respectively.

2. The cell assembly (1) of claim 1, wherein a plurality of first magnets (111) are disposed on the first surface (11), and a plurality of second magnets (211) are disposed on the second surface (21),
wherein the plurality of first (111) and second magnets (211) are disposed at corresponding positions, respectively.

3. The cell assembly (1) of claim 1, wherein each of the first surface (11) and the second surface (21) is made of a pouch material,
the first magnet (111) is printed on a surface of the first surface (11), and
the second magnet (211) is printed on a surface of the second surface (21).

4. The cell assembly (11) of claim 1, wherein the second cell (20) further comprises a second' surface (22) disposed at a side opposite to the second surface (21), and
at least one or more second'' magnets (221) are disposed on the second' surface (22).

5. The cell assembly (1) of claim 4, wherein the cell assembly (1) further comprises a third cell (30), which is one cell of the plurality of cells,
wherein the third cell (30) comprises a third surface (31) that faces the second' surface (22), and
a third magnet (311) having a polarity opposite to that of the second'' magnet (221) is disposed at a position corresponding to the second" magnet (221) on the third surface (31).

6. The cell assembly (1) of claim 5, wherein a second‴ magnet (222) having a polarity that is opposite to that of the second'' magnet (221) is further disposed on the second' surface (22), and
a third' magnet (312) having a polarity that is opposite to that of the second''' magnet (222) is further disposed on the third surface (31),
wherein the second''' magnet (222) and the third' magnet (312) are disposed at positions corresponding to each other, respectively.

7. The cell assembly (1) of claim 6, wherein the second magnet (211) and the second" magnet (221) are disposed at positions corresponding to each other, respectively, and
the second' magnet (212) and the second‴ magnet (222) are disposed at positions corresponding to each other, respectively.

8. The cell assembly (1) of claim 6, wherein the second magnet (211) and the second" magnet (221) are disposed at different positions, respectively, and
the second' magnet (212) and the second‴ magnet (222) are disposed at different positions, respectively.

9. The cell assembly (1) of claim 7 or 8, wherein each of the second' surface (22) and the third surface (31) is made of a pouch material,
the second'' magnet (221) is printed on a surface of the second' surface (22), and
the third magnet (311) is printed on a surface of the third surface (31).

10. A battery module comprising:
the cell assembly (1) of claim 1; and
a frame configured to accommodate the cell assembly (1).

11. A battery pack comprising:
the battery module of claim 10; and
a housing configured to accommodate the battery module.

## Patentansprüche

1. Zellenanordnung (1), in der eine Vielzahl von Zellen gestapelt ist, wobei die Zellenanordnung Folgendes umfasst:
eine erste Zelle (10), die eine aus der Vielzahl von Zellen ist; und
eine zweite Zelle (20), die der ersten Zelle (10) zugewandt ist,
wobei die erste Zelle (10) eine erste Oberfläche (11) umfasst, die der zweiten Zelle (20) zugewandt ist, und
die zweite Zelle (20) eine zweite Oberfläche (21) umfasst, die der ersten Oberfläche (11) zugewandt ist,
wobei ein erster Magnet (111) mit einer ersten Polarität auf der ersten Oberfläche (11) angeordnet ist,
ein zweiter Magnet (211) mit einer zweiten Polarität, die der ersten Polarität (111) entgegengesetzt ist, auf der zweiten Oberfläche (21) angeordnet ist,
der erste Magnet (111) und der zweite Magnet (211) an einander entsprechenden Positionen angeordnet sind,
wobei ein erster Magnet' (112) mit der zweiten Polarität ferner auf der ersten Oberfläche (11) angeordnet ist, und
ein zweiter Magnet' (212) mit der ersten Polarität ferner auf der zweiten Oberfläche (21) angeordnet ist,
wobei der erste Magnet' und der zweite Magnet' (112, 212) jeweils an entsprechenden Positionen angeordnet sind.

2. Zellenanordnung (1) nach Anspruch 1, wobei eine Vielzahl von ersten Magneten (111) auf der ersten Oberfläche (11) angeordnet ist, und eine Vielzahl von zweiten Magneten (211) auf der zweiten Oberfläche (21) angeordnet ist,
wobei die Vielzahl von ersten (111) und zweiten Magneten (211) jeweils an entsprechenden Positionen angeordnet ist.

3. Zellenanordnung (1) nach Anspruch 1, wobei jede der ersten Oberfläche (11) und der zweiten Oberfläche (21) aus einem Pouch-Material hergestellt ist,
der erste Magnet (111) auf eine Oberfläche der ersten Oberfläche (11) gedruckt ist, und
der zweite Magnet (211) auf eine Oberfläche der zweiten Oberfläche (21) gedruckt ist.

4. Zellenanordnung (1) nach Anspruch 1, wobei die zweite Zelle (20) ferner eine zweite Oberfläche' (22) umfasst, die auf einer der zweiten Oberfläche (21) gegenüberliegenden Seite angeordnet ist, und
mindestens ein oder mehrere zweite Magnete" (221) auf der zweiten Oberfläche' (22) angeordnet sind.

5. Zellenanordnung (1) nach Anspruch 4, wobei die Zellenanordnung (1) ferner eine dritte Zelle (30) umfasst, die eine Zelle aus der Vielzahl von Zellen ist,
wobei die dritte Zelle (30) eine dritte Oberfläche (31) umfasst, die der zweiten Oberfläche' (22) zugewandt ist, und
ein dritter Magnet (311) mit einer Polarität, die der des zweiten Magneten" (221) entgegengesetzt ist, an einer Position angeordnet ist, die dem zweiten Magneten" (221) auf der dritten Oberfläche (31) entspricht.

6. Zellenanordnung (1) nach Anspruch 5, wobei ein zweiter Magnet‴ (222) mit einer Polarität, die der des zweiten Magneten" (221) entgegengesetzt ist, ferner auf der zweiten Oberfläche' (22) angeordnet ist, und
ein dritter Magnet' (312) mit einer Polarität, die der des zweiten Magneten‴ (222) entgegengesetzt ist, ferner auf der dritten Oberfläche (31) angeordnet ist,
wobei der zweite Magnet‴ (222) und der dritte Magnet' (312) jeweils an einander entsprechenden Positionen angeordnet sind.

7. Zellenanordnung (1) nach Anspruch 6, wobei der zweite Magnet (211) und der zweite Magnet" (221) jeweils an einander entsprechenden Positionen angeordnet sind, und
der zweite Magnet' (212) und der zweite Magnet‴ (222) jeweils an einander entsprechenden Positionen angeordnet sind.

8. Zellenanordnung (1) nach Anspruch 6, wobei der zweite Magnet (211) und der zweite Magnet" (221) jeweils an unterschiedlichen Positionen angeordnet sind, und
der zweite Magnet' (212) und der zweite Magnet‴ (222) jeweils an unterschiedlichen Positionen angeordnet sind.

9. Zellenanordnung (1) nach Anspruch 7 oder 8, wobei jede der zweiten Oberfläche' (22) und der dritten Oberfläche (31) aus einem Pouch-Material hergestellt ist,
der zweite Magnet" (221) auf eine Oberfläche der zweiten Oberfläche' (22) gedruckt ist, und
der dritte Magnet (311) auf eine Oberfläche der dritten Oberfläche (31) gedruckt ist.

10. Batteriemodul, umfassend:
die Zellenanordnung (1) nach Anspruch 1; und
einen Rahmen, der konfiguriert ist, um die Zellenanordnung (1) aufzunehmen.

11. Batteriepack, umfassend:
das Batteriemodul nach Anspruch 10; und
ein Gehäuse, das konfiguriert ist, um das Batteriemodul aufzunehmen.

## Revendications

1. Ensemble de cellules (1) dans lequel une pluralité de cellules sont empilées, l'ensemble de cellules comprenant :
une première cellule (10) qui est l'une de la pluralité de cellules ; et
une deuxième cellule (20) qui fait face à la première cellule (10),
dans lequel la première cellule (10) comprend une première surface (11) qui fait face à la deuxième cellule (20), et
la deuxième cellule (20) comprend une deuxième surface (21) qui fait face à la première surface (11),
dans lequel un premier aimant (111) ayant une première polarité est disposé sur la première surface (11),
un deuxième aimant (211) ayant une deuxième polarité qui est opposée à la première polarité (111) est disposé sur la deuxième surface (21),
le premier aimant (111) et le deuxième aimant (211) sont disposés à des positions se correspondant l'une à l'autre,
dans lequel un premier aimant' (112) ayant la deuxième polarité est en outre disposé sur la première surface (11), et
un deuxième aimant' (212) ayant la première polarité est en outre disposé sur la deuxième surface (21),
dans lequel les premier' et deuxième' aimants (112, 212) sont disposés à des positions correspondantes, respectivement.

2. Ensemble de cellules (1) selon la revendication 1, dans lequel une pluralité de premiers aimants (111) sont disposés sur la première surface (11), et une pluralité de deuxièmes aimants (211) sont disposés sur la deuxième surface (21),
dans lequel la pluralité de premiers (111) et deuxièmes aimants (211) sont disposés à des positions correspondantes, respectivement.

3. Ensemble de cellules (1) selon la revendication 1, dans lequel chacune de la première surface (11) et de la deuxième surface (21) est constituée d'un matériau de poche,
le premier aimant (111) est imprimé sur une surface de la première surface (11), et
le deuxième aimant (211) est imprimé sur une surface de la deuxième surface (21).

4. Ensemble de cellules (1) selon la revendication 1, dans lequel la deuxième cellule (20) comprend en outre une deuxième surface' (22) disposée sur un côté opposé à la deuxième surface (21), et
au moins un ou plusieurs deuxièmes aimants" (221) sont disposés sur la deuxième surface' (22).

5. Ensemble de cellules (1) selon la revendication 4, dans lequel l'ensemble de cellules (1) comprend en outre une troisième cellule (30), qui est une cellule de la pluralité de cellules,
dans lequel la troisième cellule (30) comprend une troisième surface (31) qui fait face à la deuxième surface' (22), et
un troisième aimant (311) ayant une polarité opposée à celle du deuxième aimant" (221) est disposé à une position correspondant au deuxième aimant" (221) sur la troisième surface (31).

6. Ensemble de cellules (1) selon la revendication 5, dans lequel un deuxième aimant‴ (222) ayant une polarité qui est opposée à celle du deuxième aimant" (221) est en outre disposé sur la deuxième surface' (22), et
un troisième aimant' (312) ayant une polarité qui est opposée à celle du deuxième aimant‴ (222) est en outre disposé sur la troisième surface (31),
dans lequel le deuxième aimant‴ (222) et le troisième aimant' (312) sont disposés à des positions se correspondant l'une à l'autre, respectivement.

7. Ensemble de cellules (1) selon la revendication 6, dans lequel le deuxième aimant (211) et le deuxième aimant" (221) sont disposés à des positions se correspondant l'une à l'autre, respectivement, et
le deuxième aimant' (212) et le deuxième aimant‴ (222) sont disposés à des positions se correspondant l'une à l'autre, respectivement.

8. Ensemble de cellules (1) selon la revendication 6, dans lequel le deuxième aimant (211) et le deuxième aimant" (221) sont disposés à des positions différentes, respectivement, et
le deuxième aimant' (212) et le deuxième aimant‴ (222) sont disposés à des positions différentes, respectivement.

9. Ensemble de cellules (1) selon la revendication 7 ou 8, dans lequel chacune de la deuxième surface' (22) et de la troisième surface (31) est constituée d'un matériau de poche,
le deuxième aimant" (221) est imprimé sur une surface de la deuxième surface' (22), et
le troisième aimant (311) est imprimé sur une surface de la troisième surface (31).

10. Module de batterie comprenant :
l'ensemble de cellules (1) selon la revendication 1 ; et
un cadre configuré pour recevoir l'ensemble de cellules (1).

11. Bloc-batterie comprenant :
le module de batterie selon la revendication 10 ; et
un boîtier configuré pour recevoir le module de batterie.
